Europäisches Patentamt

European Patent Office

Office européen des brevets

(11) Veröffentlichungsnummer: **0 327 726**

**A2**

(12) **EUROPÄISCHE PATENTANMELDUNG**

(21) Anmeldenummer: 88121747.5

(22) Anmeldetag: 28.12.88

(51) Int. Cl.⁴: **F16D 59/00**

(30) Priorität: 04.02.88 DE 3803290

(43) Veröffentlichungstag der Anmeldung:
16.08.89 Patentblatt 89/33

(84) Benannte Vertragsstaaten:
**DE ES FR GB IT SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Gausrab, Klaus, Dipl.-Ing.**
**Knoedlergasse 2**
**D-7302 Ostfildern 2(DE)**
Erfinder: **Müller, Robert, Dipl.-Ing.**
**Badstrasse 21**
**D-7251 Mönsheim(DE)**

(54) **Fliehkraftbremse.**

(57) Diese Fliehkraftbremse umfasst Fliehbacken, die mit Zusatzgewichten zusammenarbeiten.

Jedes Zusatzgewicht besitzt eine ringartige Grundform und erstreckt sich mit einem Ringabschnitt entlang der zu beeinflussenden Fliehbacke. Außerdem wirkt das Zusatzgewicht unter Vermittlung eines Übertragungsglieds und eines Stützteils mit der Fliehbacke zusammen.

FIG.1

EP 0 327 726 A2

## Fliehkraftbremse

Die Erfindung bezieht sich auf eine Fliehkraftbremse nach dem Oberbegriff des Patentanspruchs 1.

Bei einer bekannten Fliehkraftbremse, DE-AS 1 253 593, werden die Zusatzgewichte, die mit den Fliehbacken zusammenwirken, durch dreieckige schwenkbare Platten gebildet, die mittels Zugfedern in einer Grundstellung gehalten werden. Dieser Ausführung haftet der Nachteil an, daß der Übersetzung zwischen den Zusatzgewichten und den Fliehbacken aufgrund der Reibverhältnisse und auch der Selbsthemmung enge Grenzen gesetzt sind. Hinzu kommt, daß die Fliehmassen der Zusatzgewichte relativ nahe dem Drehpunkt der Fliehkraftbremse liegen, wodurch sich lediglich kleine Fliehkräfte erzeugen lassen. Schließlich verursachen die Zusatzgewichte einen verhältnismäßig hohen Bauaufwand; auch der beanspruchte Bauraum ist groß.

Aufgabe der Erfindung ist es, eine hochwirksame Fliehkraftbremse zu schaffen, deren Fliehgewichte und Zusatzgewichte so gestaltet sind, daß bei relativ kleinem Außendurchmesser und geringen Massen der Fliehkraftbremse hohe Bremsmomente erzeugt werden können. Dabei sollte aber auch sichergestellt sein, daß die Bauteile der Fliehkraftbremse einfach sind, wenig Raum beanspruchen und sich leicht in die zuletzt genannte integrieren lassen.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Zusatzgewichte mit ihren Ringabschnitten günstige Massenverhältnisse schaffen und wenig Raum beanspruchen. Dabei läßt sich der Außendurchmesser der Fliehkraftbremse, obwohl hohe Bremsmomente erzeugbar sind, klein halten. Darüber hinaus sind die Zusatzgewichte, die Übertragungsglieder und die Stützteile leicht herstellbare Teile.

In der Zeichnung wird ein Ausführungsbeispiel der Erfindung gezeigt, das nachstehend näher beschrieben ist.

Es zeigt

Fig. 1 einen Querschnitt durch eine Fliehkraftbremse,

Fig. 2 einen Schnitt nach der Linie II-II der Fig. 1,

Fig. 3 einen schematischen Schnitt nach der Linie III-III der Fig. 1.

Die Fliehkraftbremse 1 ist beispielsweise Bestandteil eines Sperrsystems für ein Kraftfahrzeug mit Allradantrieb. Ein derartiges Sperrsystem ist in der DE-PS 3 507 490 detailliert beschrieben.

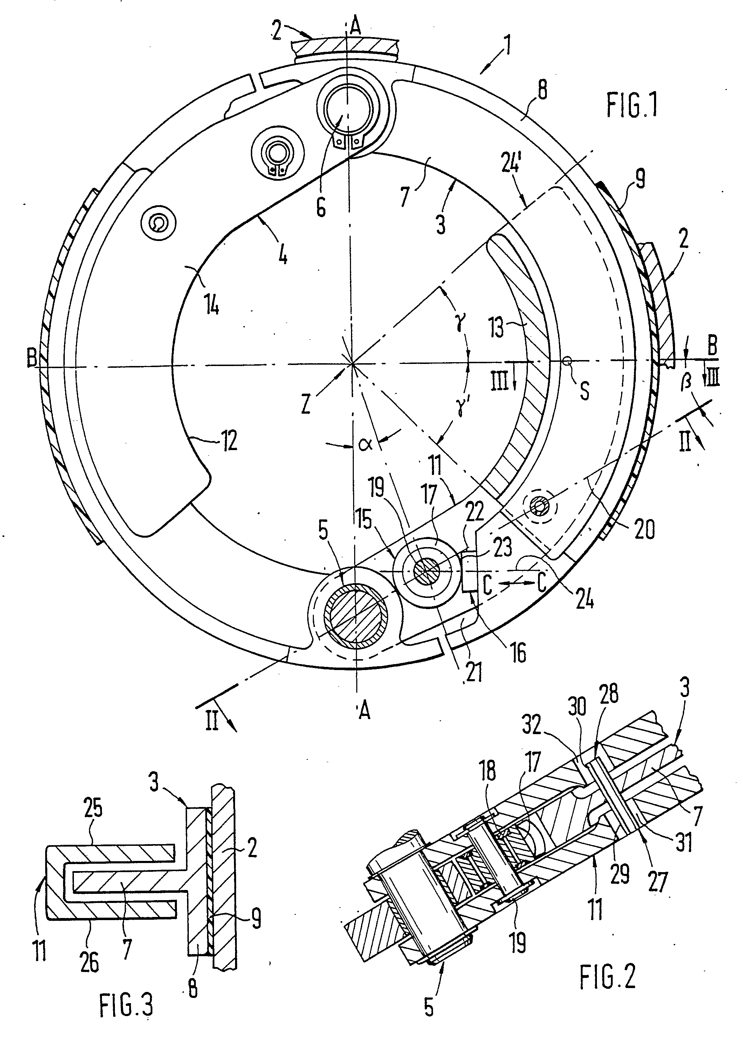

In einem kreiszylindrischen Gehäuse 2 ist die um ein Zentrum Z rotierende Fliehkraftbremse 1 untergebracht und sie umfasst zwei ringartige, durch Radien von Z aus definierte Fliehbacken 3, 4, die an Drehlagern 5, 6 angelenkt sind. Die Drehlager 5, 6 sind benachbart dem Gehäuse 2 an gegenüberliegenden Seiten angebracht und zwar auf einer senkrechten, das Zentrum Z einschließenden Mittelebene A-A der Fig. 1.

Jede Fliehbacke 3 besteht aus einer Leichtmetall-Legierung, ist im Querschnitt T-förmig ausgebildet und besitzt einen Steg 7 sowie einen Belagträger 8. Der Belagträger 8 ist mit einem Bremsbelag 9 versehen, der sich zwischen Belagträger 8 und Gehäuse 2 erstreckt.

Mit den Fliehbacken 3, 4 arbeiten Zusatzgewichte 11, 12 zusammen, die relativ zu den Fliehbacken eine gegensinnige Bewegung ausführen und eine ringartige Grundform aufweisen; sie wird ebenfalls durch Radien von Z aus definiert. Dabei sind die aus eisenmetallischem Werkstoff, beispielsweise Grauguß, bestehenden Zusatzgewichte 11, 12 mit Ringabschnitten 13, 14 versehen, die sich entlang der von ihnen zu beeinflussenden Fliehbacken 3, 4 erstrecken. Außerdem sind die Zusatzgewichte 11, 12 an den Drehlagern 5, 6 schwenkbar angeordnet, derart, daß das jeweilige Zusatzgewicht 11 oder 12 an dem Drehlager 5 oder 6 der von ihm unbeeinflussten Fliehbacke 3 oder 4 gelagert ist.

Zwischen den Zusatzgewichten 11 und der Fliehbacke 3 ist ein Übertragungsglied 15 und ein Stützteil 16 vorgesehen. Beide sind in der Nähe des Drehlagers 5 des Zusatzgewichtes 11 angebracht. Das Übertragungsglied 5 ist eine Rolle 17, die unter Vermittlung eines Nadellagers 18 auf einem Bolzen 19 gelagert ist. Der Bolzen 19 ist am Zusatzgewicht 11 gehalten und mit Bezug auf das Zentrum Z sowie die Mittellängsebene A-A im Winkel $\alpha$ (= 20°) zu diesem angeordnet. Außerdem liegt er auf einer Linie 20, die den Mittelpunkt des Drehlagers 5 schneidet und im Winkel $\beta$ (= 30°) zu einer horizontalen, das Zentrum Z einschließenden Mittellängsebene B-B verläuft.

Das Stützteil 16 ist an der Fliehbacke 3 angebracht und zwar benachbart seinem freien Ende 21, wobei es durch einen Zapfen 22 dargestellt ist, der von einem Anschlag 23 begrenzt wird. Der Anschlag 23 arbeitet mit dem äußeren Umfang der Rolle 16 zusammen. Eine Mittellinie 24 des in axialer Richtung C-C beispielsweise mittels eines Gewindes verstellbaren Zapfens 22 verläuft parallel zu Mittellängsebene B-B und ist auf den Mittelpunkt

des Bolzens 19 ausgerichtet.

Der Ringabschnitt 13 erstreckt sich über die Mittellängsebene B-B hinaus und sein freies Ende 24' ist durch den Winkel $\gamma$ (= 45°) ausgehend vom Zentrum Z definiert. In einem Bereich, der die Winkel $\gamma$ und $\gamma'$ einschließt, ist der Ringabschnitt 13 des Zusatzgewichts 11 im Querschnitt als U-Profil ausgebildet. Zwischen Schenkeln 25 und 26 des U-Profils erstreckt sich der Steg 7 der Fliehbacke 3. Durch diese Ausgestaltung liegt der Schwerpunkt S des Zusatzgewichts 11 auf der Mittellängsebene B-B.

Eine Fixierungseinrichtung ist mit 27 bezeichnet, die, auf der Linie 20 angeordnet, zwischen Fliehbacke 3 und Zusatzgewicht 11 wirksam ist. Die Fixierungseinrichtung 27 umfaßt einen Zapfen 28, der am Steg 7 der Fliehbacke 3 festgesetzt ist. Der Zapfen 28 besitzt über den Steg 7 hinausragende Abschnitte 29, 30, die in Öffnungen 31, 32 ruhen. Die Durchmesser der Öffnungen 31, 32 sind größer als die Durchmesser der Abschnitte 29, 30.

## Ansprüche

1. Fliehkraftbremse, insbesondere für ein ein Planetengetriebe umfassendes Sperrsystem, das in einen Längs-Antriebsstrang eines Allradantrieb aufweisenden Fahrzeugs eingebaut ist, wobei die Fliehkraftbremse ein kreiszylindrisches Gehäuse und wenigstens zwei mittels Drehlagern angelenkte ringartige Fliehbacken aufweist, die mit schwenkbaren Zusatzgewichten zusammenwirken, dadurch gekennzeichnet, daß jedes Zusatzgewicht (11 oder 12) eine ringartige Grundform besitzt und sich mit einem Ringabschnitt (13 oder 14) entlang der zu beeinflussenden Fliehbacke (11 oder 12) erstreckt und daß das Zusatzgewicht (11) mit einem Übertragungsglied (15) an einem vorzugsweise benachbart einem freien Ende (20) der Fliehbacke (11) vorgesehenen Stützteil (16) angreift.

2. Fliehkraftbremse nach Anspruch 1, dadurch gekennzeichnet, daß das Zusatzgewicht (11) am Drehlager (5) der von ihm unbeeinflussten Fliehbacke (4) angelenkt ist.

3. Fliehkraftbremse nach Anspruch 1, dadurch gekennzeichnet, daß jedes Zusatzgewicht (11) zumindest über einen Teilbereich seiner zu beeinflussenden Fliehbacke (3) ein im Querschnitt gesehen U-förmiges Profil besitzt, wobei sich zwischen den Schenkeln (24, 25 des Profils ein Steg (7) der Fliehbacke (3) erstreckt.

4. Fliehkraftbremse nach Anspruch 1, dadurch gekennzeichnet, daß das Übertragungsglied (15) und das Stützelement (16) benachbart dem Drehlager (5) des Zusatzgewichts (11) angeordnet sind.

5. Fliehkraftbremse nach Anspruch 4, dadurch gekennzeichnet, daß das Übertragungsglied (15) eine Rolle (17) ist, deren äußerer Umfang mit einem Anschlag (23) des Stützelements (16) zusammenarbeitet.

6. Fliehkraftbremse nach Anspruch 5, dadurch gekennzeichnet, daß das Stützelement (16) ein auf die Rolle (17) ausgerichteter Zapfen (22) ist.

7. Fliehkraftbremse nach Anspruch 5, dadurch gekennzeichnet, daß zur Lagerung der Rolle (17) ein Nadellager (18) dient.

8. Fliehkraftbremse nach Anspruch 1, dadurch gekennzeichnet, daß zwischen jeder Fliehbacke (3) und dem zugehörigen Zusatzgewicht (11) eine diese in einer Grundstellung festlegende Fixierungseinrichtung (26) vorgesehen ist.

9. Fliehkraftbremse nach den Ansprüchen 3 und 8, dadurch gekennzeichnet, daß die Fixierungseinrichtung (27) ein im Steg (7) der Fliehbacke (3) festgesetzter Zapfen (28) ist, dessen über den Steg (3) hinausragende Abschnitte (29, 30) in Öffnungen (31, 32) der Schenkel (25, 26) des Zusatzgewichts (11) hineinragen, wobei der Durchmesser der Öffnungen (31, 32) größer ist als der Durchmesser der Abschnitte (29, 30).

10. Fliehkraftbremse nach Anspruch 1, dadurch gekennzeichnet, daß die Fliehbacken (3, 4) aus leichtmetallischem und die Zusatzgewichte (11, (12) aus eisenmetallischem Werkstoff bestehen.

EP 0 327 726 A2

FIG.1

FIG.2

FIG.3